(19) Europäisches Patentamt
European Patent Office
Office européen des brevets

(11) EP 3 712 527 A1

(12) EUROPÄISCHE PATENTANMELDUNG

(43) Veröffentlichungstag:
23.09.2020 Patentblatt 2020/39

(51) Int Cl.:
F24F 11/00 (2018.01)      F24F 11/49 (2018.01)
F24F 11/62 (2018.01)      F24F 11/74 (2018.01)
F24F 11/48 (2018.01)      G05D 7/06 (2006.01)

(21) Anmeldenummer: 20162915.1

(22) Anmeldetag: 13.03.2020

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(30) Priorität: 18.03.2019 DE 102019106843

(71) Anmelder: TROX GmbH
47506 Neukirchen-Vluyn (DE)

(72) Erfinder:
• Hampel, Jochen
47506 Neukirchen-Vluyn (DE)
• Wolters, Thomas
41812 Erkelenz (DE)

(74) Vertreter: Dr. Stark & Partner Patentanwälte mbB
Moerser Straße 140
47803 Krefeld (DE)

(54) VERFAHREN ZUM ABGLEICH DER VOLUMENSTRÖME MEHRERER LUFTDURCHLÄSSE

(57) Die Erfindung betrifft ein Verfahren zum Abgleich der Volumenströme mehrerer Luftdurchlässe (1, 2, 3, 4, n) untereinander, wobei die Luftdurchlässe (1, 2, 3, 4, n), deren Volumenströme ($V_1$, $V_2$, $V_3$, $V_4$, $V_n$) untereinander abgeglichen werden sollen, von einem gemeinsamen Luftkanal (17) abzweigen und parallel zueinander angeordnet sind und wobei jedem Luftdurchlass (1, 2, 3, 4, n) ein Drosselelement (10, 11, 12, 13 14) zur Veränderung der zur Verfügung stehenden freien Strömungsfläche zugeordnet ist. Um ein Verfahren anzugeben, das einen einfacheren und schnelleren Abgleich der Volumenströme parallel angeordneter Luftdurchlässe eines Luftkanals bei einer möglichst hohen Genauigkeit ermöglicht, soll
- zunächst in einem ersten Schritt bei einem unveränderten mittels zumindest eines Ventilators (16) in den Luftkanal (17) eingeblasenen Luftstrom bzw. bei einem unveränderten mittels zumindest eines Ventilators (16) aus dem Luftkanal (17) abgezogenen Ist-Volumenstrom an jedem Luftdurchlass (1, 2, 3, 4, n) der durch diesen Luftdurchlass (1, 2, 3, 4, n) ausgeblasene Ist-Volumenstrom bzw. an jedem Luftdurchlass (1, 2, 3, 4, n) der durch diesen Luftdurchlass (1, 2, 3, 4, n) angesaugte Ist-Volumenstrom anhand Messen der Geschwindigkeit und/oder anhand Messen des Wirkdruckes bestimmt werden,
- dass anschließend in einem zweiten Schritt unter Berücksichtigung des jeweiligen Widerstandsbeiwertes $\zeta$ (Zeta-Wert) der Kombination eines jeden Luftdurchlasses (1, 2, 3, 4, n) und seines zugehörigen Drosselelementes (10, 11, 12, 13 14) einerseits, des in dem ersten Schritt bestimmten Ist-Volumenstroms ($V_1$, $V_2$, $V_3$, $V_4$,

$V_n$) eines jeden Luftdurchlasses (1, 2, 3, 4, n) andererseits sowie auch der Luftdichte p des Luftstroms mathematisch die Stellung des Drosselelementes (10, 11, 12, 13 14) jedes Luftdurchlasses (1, 2, 3, 4, n) ermittelt werden und
- dass dann in einem dritten Schritt an jedem Drosselelement (10, 11, 12, 13 14) die jeweilige, für dieses Drosselelement (10, 11, 12, 13 14) ermittelte Stellung eingestellt werden.

## Beschreibung

Die Erfindung betrifft ein Verfahren zum Abgleich der Volumenströme mehrerer Luftdurchlässe untereinander, wobei die Luftdurchlässe, deren Volumenströme untereinander abgeglichen werden sollen, von einem gemeinsamen Luftkanal in Strömungsrichtung an unterschiedlichen Stellen abzweigen und strömungstechnisch gesehen parallel zueinander angeordnet sind und wobei jedem Luftdurchlass ein einstellbares Drosselelement zur Veränderung der zur Verfügung stehenden freien Strömungsfläche zugeordnet ist.

In einem verzweigten Kanalnetz einer raumluft- und/oder klimatechnischen Anlage können an einem Luftkanal eine Vielzahl n unterschiedlicher Luftdurchlässe parallel angeschlossen sein. Sofern es sich bei den Luftdurchlässen um Zuluftauslässe handelt, soll jeder einzelne dieser Zuluftauslässe von einer zentralen Luftversorgungseinheit mit einer bestimmen Luftmenge $V_{nenn}$ versorgt werden. Sofern es sich um Ablufteinlässe handelt, soll über jeden einzelnen dieser Ablufteinlässe von einer zentralen Luftabsaugeinheit eine bestimmte Luftmenge $V_{nenn}$ abgesaugt werden.

Allerdings sind die Druckverluste endständiger Komponenten, wie beispielsweise den vorerwähnten Luftdurchlässen, verglichen mit den Druckverlusten der Verteilleitungen, über die die jeweilige endständige Komponente, beispielsweise ein Luftdurchlass, mit dem Luftkanal verbunden ist, nicht dominant. Daher verteilt sich die über den Luftkanal zugeführte Luft oder die über den Luftkanal abgeführte Luft unter den Luftdurchlässen des Luftkanals gemäß der sich einstellenden Druckverhältnisse. Infolgedessen werden die beabsichtigten Sollmengen nicht erreicht.

Daher ist nach der Installation der Luftdurchlässe ein Abgleich erforderlich. Unter dem Abgleich wird der Einstellvorgang verstanden, so dass jeder der Zuluftauslässe von einer zentralen Luftversorgungseinheit mit der gewünschten Luftmenge $V_{nenn}$ versorgt wird bzw. über jeden der Ablufteinlässe von einer zentralen Luftabsaugeinheit die gewünschte Luftmenge $V_{nenn}$ abgesaugt wird. Bisher erfolgt ein iterativer Abgleich durch wiederholtes Verstellen des Drosselelementes jedes Luftdurchlasses. Dieses Verstellen wird so lange durchgeführt, bis der einzelne Druckverlust mittels eines Drosselelementes so abgestimmt ist, dass bei allen Luftdurchlässen die gewünschte Sollmenge des Volumenstroms getroffen wird. Dazu werden die Ist-Mengen erfasst und das einzelne Drosselelement jedes Luftdurchlasses verstellt. Da sich jedoch mit jeder einzelnen Verstellung wieder das Druckniveau in dem kompletten Luftverteilsystem ändert, muss dieses Verfahren mehrfach durchgeführt werden. Insoweit ist das Verfahren aufwendig und auch nicht hinreichend genau.

Aufgabe der Erfindung ist es, die vorgenannten Nachteile zu vermeiden und ein Verfahren anzugeben, das einen einfacheren und schnelleren Abgleich der Volumenströme parallel angeordneter Luftdurchlässe eines Luftkanals bei einer möglichst hohen Genauigkeit ermöglicht.

Diese Aufgabe wird dadurch gelöst, dass

- zunächst in einem ersten Schritt

    bei einem unveränderten mittels zumindest eines Ventilators in den Luftkanal eingeblasenen Luftstrom bzw. bei einem unveränderten mittels zumindest eines Ventilators aus dem Luftkanal abgezogenen Ist-Volumenstrom

    an jedem Luftdurchlass der durch diesen Luftdurchlass ausgeblasene Ist-Volumenstrom bzw. an jedem Luftdurchlass der durch diesen Luftdurchlass angesaugte Ist-Volumenstrom anhand Messen der Geschwindigkeit und/oder anhand Messen des Wirkdruckes bestimmt wird,

- dass anschließend in einem zweiten Schritt unter Berücksichtigung

    - des jeweiligen Widerstandsbeiwertes $\zeta$ (Zeta-Wert) der Kombination eines jeden Luftdurchlasses und seines zugehörigen Drosselelementes einerseits,
    - des in dem ersten Schritt bestimmten Ist-Volumenstroms eines jeden Luftdurchlasses andererseits sowie auch
    - der Luftdichte $\rho$ des Luftstroms

    mathematisch die Stellung des Drosselelementes jedes Luftdurchlasses ermittelt wird und

- dass dann in einem dritten Schritt an jedem Drosselelement die jeweilige, für dieses Drosselelement ermittelte Stellung, beispielsweise manuell oder mittels eines Antriebs, eingestellt wird.

Bei den Luftdurchlässen kann es sich entweder um Zuluftauslässe oder um Ablufteinlässe handeln.

Bei dem erfindungsmäßen Verfahren ist nur eine einzige Ist-Volumenstrommessung pro Luftdurchlass erforderlich, um nach Durchführung des erfindungsgemäßen Verfahrens einen genauen und schnellen Volumenstromabgleich aller Luftdurchlässe zu erzielen.

In einem ersten Schritt werden die Ist-Luftvolumenströme einmalig initial gemessen. Es ist nur eine einzige Ist-Volumenstrommessung pro Luftdurchlass erforderlich, so dass bei einer Anzahl von n Luftdurchlässen insgesamt eine Anzahl von n Ist-Volumenstrommessungen durchgeführt werden. Die n Ist-Volumenstrommessungen erfolgen bei einem während aller n Ist-Volumenstrommessungen unveränderten, mittels zumindest eines Ventilators in den Luftkanal eingeblasenen Luftstrom bzw. bei einem während aller n Ist-Volumenstrommessungen unveränderten mittels zumindest eines Ventilators aus dem Luftkanal abgezogenen Luftstrom.

Bei jeder Ist-Volumenstrommessung müssen zum einen der Drosselzustand (Stellung des Drosselelementes) und zum anderen die Drossel-Charakteristika (Zeta-Wert $\zeta$ der Kombination bestehend aus Luftdurchlass und dem dazugehörigen Drosselelement) des Drosselelementes jedes gemessenen Luftdurchlasses zum Messzeitpunkt bekannt sein.

Das Drosselelement kann in einer separaten Komponente angeordnet sein. Bei einer solchen Ausgestaltung setzt sich der Zeta-Wert $\zeta$ aus dem Zeta-Wert $\zeta$ der einen Komponente, nämlich des Luftdurchlasses, und aus dem Zeta-Wert $\zeta$ der zweiten Komponente, nämlich des von dem Luftdurchlass separat angeordneten Drosselelementes, zusammen. Alternativ kann das Drosselelement direkt in dem Luftdurchlass integriert sein. Dann handelt es sich um den Zeta-Wert $\zeta$ der Kombination, die aus dem Luftdurchlass und dem darin integrierten Drosselelement besteht.

Durch die n Ist-Volumenstrommessungen sind die Druckverhältnisse in dem Verteilsystem bekannt. Weitere Druckverluste brauchen nicht beachtet zu werden, da sie bereits in den gemessenen Ist-Luftvolumenströmen berücksichtigt sind. Der weitere Abgleich betrifft nur noch das Drosselelement in dem jeweiligen Luftdurchlass. Die Änderung des Druckverlustes als Funktion der WinkelStellung des Drosselelementes ist bekannt.

In dem zweiten Schritt des Abgleichprozesses erfolgt die mathematische Ermittlung. Bei dieser mathematischen Ermittlung wird die Stellung (Drosselstellung) jedes einzelnen Drosselelements durch eine Berechnung ermittelt, die nötig ist, um den beabsichtigten (Nenn)-Volumenstrom an jedem Luftdurchlass einzustellen.

In dem letzten dritten Schritt wird dann an jedem Drosselelement die jeweilige, für dieses Drosselelement ermittelte Stellung (Drosselstellung) eingestellt. Nach Einstellen dieser Ziel-Drosselstellung ist der Abgleichprozess abgeschlossen.

Mittels des erfindungsgemäßen Verfahrens ist ein optimaler Abgleich der über die Luftdurchlässe ausströmenden bzw. angesaugten Luftströme möglich, so dass ein abgeglichenes Luftverteilnetz geschaffen wird, in dem die Druckverluste vom Ventilator bis zu jedem einzelnen Luftdurchlass identisch sind. Jeder Pfad des Luftverteilnetzes weist bei der beabsichtigten Nennmenge an Zuluft bzw. an Abluft identische aufsummierte Druckverlust-Werte auf. Damit ist der Drosselverlust über alle Luftdurchlässe 1, 2, 3, 4, ..., n des nach Durchführung des Verfahrens abgeglichenen Luftverteilnetzes gleich und die Standardabweichung unter den resultierenden Druckverlusten $\Delta P_1$, $\Delta P_2$, $\Delta P_3$, $\Delta P_4$, ..., $\Delta P_n$ sind null.

Der dynamische Druck ($p_{dyn}$) ist die Erhöhung des Drucks durch den strömenden Luftstrom gegenüber dem statischen Druck in z. B. einem Luftleitungssystem.

Der Widerstandsbeiwert $\zeta$ - auch Zeta-Wert genannt - ist immer auf den relevanten Strömungsquerschnitt bezogen. Der Widerstandsbeiwert $\zeta$ ändert sich mit der Stellung eines Drosselelementes, wie beispielsweise einer Klappe. Bei dem Widerstandsbeiwert $\zeta$ handelt es sich um eine Kennzahl zur Berechnung des Druckverlustes $\Delta P$. Der Widerstandsbeiwert $\zeta$ wird einmalig für eine bestimmte Komponente, wie beispielsweise ein Drosselelement, durch Versuche in verschiedenen Stellungen des Drosselelementes ermittelt. Bei Kenntnis des Widerstandsbeiwertes $\zeta$ kann der Druckverlust $\Delta P$ gemäß folgender Gleichung berechnet werden

$$\Delta P \;=\; \zeta \, p_{dyn} \;=\; \zeta \cdot \rho/2 \cdot v^2$$

wobei die in der Gleichung verwendeten Variablen wie folgt sind:

$\zeta$ :   Widerstandsbeiwert bezogen auf den relevanten Querschnitt (Zeta-Wert)

$p_{dyn}$ :   dynamischer Druck (Pa)

$\rho$ :   Luftdichte (kg/m$^3$)

$v$ :   Luftgeschwindigkeit im relevanten Querschnitt, d. h. im Stutzen eines Luftdurchlasses oder in dem Luftkanal (m/s) v = V/Aref

$A_{ref}$ :   Querschnitt (m$^2$)

Das nachfolgend eingeblendete Diagramm zeigt beispielhaft für vier verschiedene Typen und/oder Größen eines Luftdurchlasses die Abhängigkeit des Widerstandsbeiwertes $\zeta$ (Zeta-Wert) von der Winkelstellung des Drosselelementes, wie beispielsweise einer Drosselklappe.

Zeta = f(Winkel-DK)

$y = 1.4495e^{0.0804x}$
$y = 1.2265e^{0.0804x}$
$y = 1.115e^{0.0804x}$
$y = 0.892e^{0.0904x}$

Winkel-Drosselklappe / °

In dem nachfolgend eingeblendeten Diagramm ist der Druckverlust $\Delta P$ als Funktion des Volumenstroms V für einen einzigen Luftdurchlass sowie beispielhaft der mittels des erfindungsgemäßen Verfahrens durchgeführte Abgleichvorgang für diesen Luftdurchlass dargestellt.

Druckverlust = f(Volumenstrom)

Winkel / $\zeta$
90° / 17.2
60° / 6.9
40° / 3.8
20° / 2
0° / 1.1

Druckverlust / Pa

Winkel nach Abgleich

Winkel vor Abgleich

Vsoll        Vinitial

Volumenstrom / m³/h

Der beabsichtigte Volumenstrom $V_{soll}$ für den in dem vorstehenden Diagramm illustrierten Luftdurchlass soll 300 m³/h betragen.

Zunächst werden einmalig in einem ersten Schritt die Ist-Luftvolumenströme aller relevanten Luftdurchlässe, zwischen denen die Luftvolumenströme abgeglichen werden sollen, initial gemessen. An dem in dem vorstehenden Diagramm illustrierten Luftdurchlass wird bei einer Winkelstellung des Drosselelementes von 0°, d. h. das Drosselelement befindet sich in seiner absoluten Offenstellung, eine Ist-Luftmenge - hier als $V_{initial}$ bezeichnet - von 500 m3/h gemessen.

In dem zweiten Schritt erfolgt die mathematische Ermittlung der Stellung (Drosselstellung) jedes einzelnen Drosselelements durch eine Berechnung. Für den in dem vorstehenden Diagramm illustrierten Luftdurchlass beträgt jedoch bei einer Stellung des Drosselelementes von 0° der Sollwert 300 m³/h.

In dem dritten Schritt muss das Drosselelement nur noch eingestellt werden. Hierfür muss bei diesem Luftdurchlass die Winkelstellung des Drosselelementes von 0° auf 24,9° geändert werden.

Dieser Vorgang wird an jedem Luftdurchlass des Luftkanals durchgeführt. Nach Durchführung des erfindungsgemäßen Verfahrens sind die Volumenströme aller Luftdurchlässe dieses Luftkanals aufeinander abgeglichen.

Zur Bestimmung im zweiten Schritt kann beispielsweise das sogenannte Simplex-Verfahren angewandt werden. Das Simplex-Verfahren stellt ein Optimierungsverfahren zur Lösung linearer Optimierungsprobleme dar. Damit kann ein lineares Lösungsproblem umfassend mehrere Gleichungen gelöst werden. Hierzu wird eine Gleichungsmatrix aufgestellt. Die Parameter werden anschließend solange variiert, bis - in dem vorliegenden Fall - die Druckverluste $\Delta P_1$, $\Delta P_2$, $\Delta P_3$, $\Delta P_4$, ..., $\Delta P_n$ gleich sind.

Das mathematische Verfahren kann eine Zielwertsuche sein. Bei diesem mathematischen Verfahren wird die Stellung des Drosselelementes jedes Luftdurchlasses aller parallel angeordneten Luftdurchlässe so lange verändert, bis die Druckverluste $\Delta P_1$, $\Delta P_2$, ..., $\Delta P_n$ über alle parallel angeordneten Luftdurchlässe bei dem angestrebten Nennvolumenstrom $V_1$, $V_2$, ..., $V_n$ identisch sind und insoweit die Standardabweichung null ist.

Zumindest ein Drosselelement kann als Klappe ausgebildet sein. Selbstverständlich sind auch andere Ausgestaltungen eines Drosselelementes denkbar.

Dabei bietet es sich an, wenn zumindest ein Drosselelement mittels eines Antriebs in seiner Stellung veränderbar ist.

Dem Drosselelement zumindest eines Luftdurchlasses kann eine Steuerung bzw. eine Regelung zugeordnet sein, die die Stellung des jeweiligen Drosselelementes steuert bzw. regelt. Nach der Ermittlung der Stellung des Drosselelementes jedes Luftdurchlasses kann die Steuerung bzw. die Regelung die Stellung des jeweiligen Drosselelementes vornehmen.

Jedem Drosselelement kann eine eigene Steuerung bzw. eine eigene Regelung zugeordnet sein. Es ist aber auch durchaus möglich, dass allen Drosselelementen eine gemeinsame Steuerung bzw. eine gemeinsame Regelung zugeordnet ist.

Die Luftdurchlässe können gleich ausgebildet sein.

Alternativ können die Luftdurchlässe unterschiedlich ausgebildet sein. Bei einer solchen Ausgestaltung unterscheiden sich die Luftdurchlässe beispielsweise in ihrer Größe, in ihren Abmessungen und/oder in ihren Leistungsmerkmalen.

Zum Messen des Wirkdruckes zur anschließenden Bestimmung des Volumenstroms des über einen Luftdurchlass ausströmenden oder abgesaugten Volumenstroms kann in dem betreffenden Luftdurchlass ein Drucksensor vorgesehen sein. Der Drucksensor misst den Wirkdruck, über den dann der Volumenstrom bestimmt werden kann.

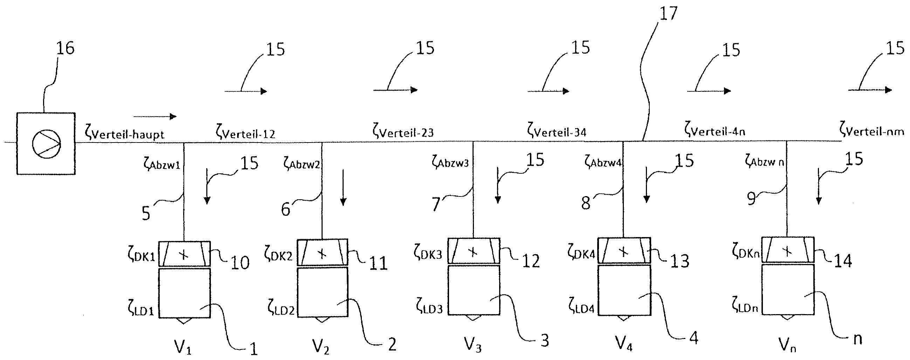

Im Folgenden wird ein in der Zeichnung dargestelltes Ausführungsbeispiel der Erfindung erläutert. Die einzige Figur zeigt einen Teil eines Luftverteilsystems. Der dargestellte Teil des Luftverteilsystems zeigt einen Teilbereich eines Luftkanals 17, von dem eine Vielzahl n unterschiedlicher Luftdurchlässe 1, 2, 3, 4, n - in dem dargestellten Ausführungsbeispiel insoweit fünf Luftdurchlässe - parallel über je eine Verteilleitung 5 bis 9 an dem Luftkanal 17 angeschlossen sind.

Bei den Luftdurchlässen 1, 2, 3, 4, n handelt es sich in dem dargestellten Ausführungsbeispiel um Zuluftauslässe. Jedem Luftdurchlass 1, 2, 3, 4, n ist ein als Drosselklappe ausgebildetes Drosselelement 10 bis 14 in Strömungsrichtung 15 gesehen vorgelagert.

Im Bereich seines linken Endes weist der Luftkanal 17 einen Ventilator 16 auf. Der Ventilator 16 bläst einen Luftstrom und damit Zuluft in Richtung der Pfeile 15 durch den Luftkanal 17 und durch die jeweilige Verteilleitung 5 bis 9 zu dem jeweiligen Luftdurchlass 1, 2, 3, 4, n. Das rechte Ende des Luftkanals 17 kann verschlossen sein. Es können aber auch - wie der rechte Pfeil 15 andeutet - an dem Luftkanal 17 noch weitere parallel angeordnete Luftdurchlässe vorgesehen sein.

Für jeden "Pfad" der in der Figur dargestellten Luftdurchlässe 1 bis n berechnet sich der Druckverlust wie folgt:

$$\Delta P_1 = \Delta P_{\text{Verteil-Haupt}} + \Delta P_{\text{Abzw1}} + \Delta P_{\text{DK1}} + \Delta P_{\text{LD1}}$$

$$\Delta P2 = \Delta P_{\text{Verteil-Haupt}} + \Delta P_{\text{Abzw1}} + \Delta P_{\text{Verteil12}} + \Delta P_{\text{Abzw2}} + \Delta P_{\text{DK2}} + \Delta P_{\text{LD2}}$$

$$\Delta P_3 = \Delta P_{\text{Verteil-Haupt}} + \Delta P_{\text{Abzw1}} + \Delta P_{\text{Verteil12}} + \Delta P_{\text{Abzw2}} + \Delta P_{\text{Verteil23}} + \Delta P_{\text{Abzw3}} + \Delta P_{\text{DK3}} + \Delta P_{\text{LD3}}$$

$$\Delta P_4 = \Delta P_{\text{Verteil-Haupt}} + \Delta P_{\text{Abzw1}} + \Delta P_{\text{Verteil12}} + \Delta P_{\text{Abzw2}} + \Delta P_{\text{Verteil23}} + \Delta P_{\text{Abzw3}} + \Delta P_{\text{Verteil34}} + \Delta P_{\text{Abzw4}} + \Delta P_{\text{DK4}} + \Delta P_{\text{LD4}}$$

$$\Delta P_n = \Delta P_{\text{Verteil-Haupt}} + \Delta P_{\text{Abzw1}} + \Delta P_{\text{Verteil12}} + \Delta P_{\text{Abzw2}} + \Delta P_{\text{Verteil23}} + \Delta P_{\text{Abzw3}} + \Delta P_{\text{Verteil34}} + \Delta P_{\text{Abzw4}} + + \Delta P_{\text{Verteil4n}} + \Delta P_{\text{Abzwn}} + \Delta P_{\text{DKn}} + \Delta P_{\text{LDn}}$$

Die in den vorgenannten Gleichungen verwendeten Variablen und Abkürzungen sind wie folgt:

$\Delta P$ :                    Druckverlust
Verteil-Haupt :        Abschnitt des Luftkanals zwischen Ventilator und erster Abzweigung
Verteil-xy :              Abschnitt des Luftkanals zwischen zwei benachbarten Abzweigungen

Abzw$_n$ :         Abzweigung vom Luftkanal zu einem Luftdurchlass
DK$_n$ :           Drosselklappe
LD$_n$ :           Luftdurchlass
V$_n$ :            Volumenstrom (m$^3$/h)

Nach Durchführung des erfindungsgemäßen Verfahrens ist das in der Figur dargestellte Luftverteilnetz abgeglichen, d. h. die jeweiligen Druckverluste $\Delta P_1$, $\Delta P_2$, $\Delta P_3$, $\Delta P_4$ und $\Delta P_n$ eines jeden einzelnen "Pfads" vom Ventilator bis zu dem jeweiligen Luftdurchlass sind identisch.
Damit ist der Drosselverlust $\Delta P$ über alle Luftdurchlässe 1, 2, 3, 4, ..., n gleich. Jeder "Pfad" weist bei dem beabsichtigten (Nenn)-Volumenstrom V$_1$, V$_2$, ..., V$_n$ den identisch aufsummierten Druckverlust-Wert $\Delta P_1$ bzw. $\Delta P_2$ bzw. $\Delta P_3$ bzw. $\Delta P_4$ bzw. $\Delta P_n$ auf.

## Patentansprüche

1. Verfahren zum Abgleich der Volumenströme mehrerer Luftdurchlässe (1, 2, 3, 4, n) untereinander, wobei die Luftdurchlässe (1, 2, 3, 4, n), deren Volumenströme (V$_1$, V$_2$, V$_3$, V$_4$, V$_n$) untereinander abgeglichen werden sollen, von einem gemeinsamen Luftkanal (17) in Strömungsrichtung an unterschiedlichen Stellen abzweigen und strömungstechnisch gesehen parallel zueinander angeordnet sind und wobei jedem Luftdurchlass (1, 2, 3, 4, n) ein einstellbares Drosselelement (10, 11, 12, 13 14) zur Veränderung der zur Verfügung stehenden freien Strömungsfläche zugeordnet ist, **dadurch gekennzeichnet, dass**

   - zunächst in einem ersten Schritt bei einem unveränderten mittels zumindest eines Ventilators (16) in den Luftkanal (17) eingeblasenen Luftstrom bzw. bei einem unveränderten mittels zumindest eines Ventilators (16) aus dem Luftkanal (17) abgezogenen Ist-Volumenstrom an jedem Luftdurchlass (1, 2, 3, 4, n) der durch diesen Luftdurchlass (1, 2, 3, 4, n) ausgeblasene Ist-Volumenstrom bzw. an jedem Luftdurchlass (1, 2, 3, 4, n) der durch diesen Luftdurchlass (1, 2, 3, 4, n) angesaugte Ist-Volumenstrom anhand Messen der Geschwindigkeit und/oder anhand Messen des Wirkdruckes bestimmt wird,
   - dass anschließend in einem zweiten Schritt unter Berücksichtigung des jeweiligen Widerstandsbeiwertes $\zeta$ (Zeta-Wert) der Kombination eines jeden Luftdurchlasses (1, 2, 3, 4, n) und seines zugehörigen Drosselelementes (10, 11, 12, 13 14) einerseits, des in dem ersten Schritt bestimmten Ist-Volumenstroms (V$_1$, V$_2$, V$_3$, V$_4$, V$_n$) eines jeden Luftdurchlasses (1, 2, 3, 4, n) andererseits sowie auch der Luftdichte $\rho$ des Luftstroms mathematisch die Stellung des Drosselelementes (10, 11, 12, 13 14) jedes Luftdurchlasses (1, 2, 3, 4, n) ermittelt wird und
   - dass dann in einem dritten Schritt an jedem Drosselelement (10, 11, 12, 13 14) die jeweilige, für dieses Drosselelement (10, 11, 12, 13 14) ermittelte Stellung eingestellt wird.

2. Verfahren nach dem vorhergehenden Anspruch, **dadurch gekennzeichnet, dass** das mathematische Verfahren eine Zielwertsuche ist.

3. Verfahren nach einem der vorhergehenden Ansprüche, **dadurch gekennzeichnet, dass** zumindest ein Drosselelement (10, 11, 12, 13 14) als Klappe ausgebildet ist.

4. Verfahren nach einem der vorhergehenden Ansprüche, **dadurch gekennzeichnet, dass** zumindest ein Drosselelement (10, 11, 12, 13 14) mittels eines Antriebs in seiner Stellung veränderbar ist.

5. Verfahren nach einem der vorhergehenden Ansprüche, **dadurch gekennzeichnet, dass** dem Drosselelement (10, 11, 12, 13 14) zumindest eines Luftdurchlasses (1, 2, 3, 4, n) eine Steuerung bzw. eine Regelung zugeordnet ist, die die Stellung des jeweiligen Drosselelementes (10, 11, 12, 13 14) steuert bzw. regelt.

6. Verfahren nach einem der vorhergehenden Ansprüche, **dadurch gekennzeichnet, dass** die Luftdurchlässe (1, 2, 3, 4, n) gleich ausgebildet sind.

7. Verfahren nach einem der Ansprüche 1 bis 6, **dadurch gekennzeichnet, dass** die Luftdurchlässe (1, 2, 3, 4, n) unterschiedlich ausgebildet sind.

8. Verfahren nach einem der Ansprüche 1 bis 7, **dadurch gekennzeichnet, dass** zum Messen des Wirkdruckes zur anschließenden Bestimmung des Volumenstroms des über einen Luftdurchlass (1, 2, 3, 4, n) ausströmenden oder abgesaugten Volumenstroms in dem betreffenden Luftdurchlass (1, 2, 3, 4, n) ein Drucksensor vorgesehen ist.

8

16  15  15  15  17  15  15

$\zeta_{Verteil-haupt}$   $\zeta_{Verteil-12}$   $\zeta_{Verteil-23}$   $\zeta_{Verteil-34}$   $\zeta_{Verteil-4n}$   $\zeta_{Verteil-nm}$

$\zeta_{Abzw1}$   $\zeta_{Abzw2}$   $\zeta_{Abzw3}$   $\zeta_{Abzw4}$   $\zeta_{Abzw\,n}$

15   15   15   15

5   6   7   8   9

$\zeta_{DK1}$ 10   $\zeta_{DK2}$ 11   $\zeta_{DK3}$ 12   $\zeta_{DK4}$ 13   $\zeta_{DKn}$ 14

$\zeta_{LD1}$   $\zeta_{LD2}$   $\zeta_{LD3}$   $\zeta_{LD4}$   $\zeta_{LDn}$

$V_1$ 1   $V_2$ 2   $V_3$ 3   $V_4$ 4   $V_n$ n

**Europäisches Patentamt**
**European Patent Office**
**Office européen des brevets**

# EUROPÄISCHER RECHERCHENBERICHT

Nummer der Anmeldung

EP 20 16 2915

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/176043 A1 (MOSS ROBERT AUSTIN [US] ET AL) 22. Juni 2017 (2017-06-22) * Absätze [0061], [0071], [0075] - [0095]; Abbildungen 1,2,3,5 * ----- | 1-8 | INV. F24F11/00 F24F11/49 F24F11/62 F24F11/74 |
| A | US 2017/167747 A1 (ZHANG QIN [US]) 15. Juni 2017 (2017-06-15) * Absätze [0058] - [0067], [0070] * ----- | 1-8 | F24F11/48 G05D7/06 |
| A | WO 02/066903 A1 (HALTON OY [FI]; KOSONEN RISTO [SG]; SALO TAPANI [FI]) 29. August 2002 (2002-08-29) * Ansprüche 1-4; Abbildung 1 * ----- | 1-8 | |

RECHERCHIERTE SACHGEBIETE (IPC)

F24F
G05D

Der vorliegende Recherchenbericht wurde für alle Patentansprüche erstellt

| Recherchenort | Abschlußdatum der Recherche | Prüfer |
|---|---|---|
| München | 28. Juli 2020 | Degen, Marcello |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 16 2915

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-07-2020

| Im Recherchenbericht angeführtes Patentdokument | Datum der Veröffentlichung | Mitglied(er) der Patentfamilie | Datum der Veröffentlichung |
|---|---|---|---|
| US 2017176043 A1 | 22-06-2017 | KEINE | |
| US 2017167747 A1 | 15-06-2017 | KEINE | |
| WO 02066903 A1 | 29-08-2002 | FI 20010306 A<br>WO 02066903 A1 | 17-08-2002<br>29-08-2002 |

Für nähere Einzelheiten zu diesem Anhang : siehe Amtsblatt des Europäischen Patentamts, Nr.12/82